Europäisches Patentamt

European Patent Office

Office européen des brevets

(19)

(11) **EP 1 230 065 B1**

(12) **EUROPÄISCHE PATENTSCHRIFT**

(45) Veröffentlichungstag und Bekanntmachung des Hinweises auf die Patenterteilung:
**10.09.2003  Patentblatt 2003/37**

(21) Anmeldenummer: **00972811.4**

(22) Anmeldetag: **19.10.2000**

(51) Int Cl.⁷: **B23K 35/363**, B23K 1/20

(86) Internationale Anmeldenummer:
**PCT/EP00/10300**

(87) Internationale Veröffentlichungsnummer:
**WO 01/030531 (03.05.2001 Gazette 2001/18)**

(54) **FLUSSMITTEL FÜR DIE TROCKENAPPLIKATION**

FLUXING AGENT FOR DRY APPLICATION

FONDANT POUR APPLICATION A SEC

(84) Benannte Vertragsstaaten:
**AT BE CH CY DE DK ES FI FR GB GR IE IT LI LU MC NL PT SE**

(30) Priorität: **25.10.1999  DE 19951454
05.10.2000  DE 10049315**

(43) Veröffentlichungstag der Anmeldung:
**14.08.2002  Patentblatt 2002/33**

(73) Patentinhaber: **Solvay Fluor und Derivate GmbH
30173 Hannover (DE)**

(72) Erfinder:
• **SWIDERSKY, Hans-Walter
30175 Hannover (DE)**
• **OTTMANN, Alfred
30627 Hannover (DE)**
• **BELT, Heinz-Joachim
30938 Burgwedel (DE)**

(74) Vertreter: **Fischer, Reiner
Solvay Pharmaceuticals GmbH
Hans-Böckler-Allee 20
30173 Hannover (DE)**

(56) Entgegenhaltungen:
**WO-A-82/02014          DE-A- 19 845 758
US-A- 4 989 775**

**Beschreibung**

Die Erfindung bezieht sich auf ein Flußmittel, welches zur Trockenapplikation verwendbar ist, und seine Verwendung als Lötflußmittel.

Seit vielen Jahren ist es bekannt, Bauteile aus Aluminium oder Aluminiumlegierungen, insbesondere Wärmetauscher für die Automobilindustrie, unter Verwendung von Flußmitteln auf Basis von Alkalifluoraluminat miteinander zu verlöten. Dabei wird das Flußmittel üblicherweise als wäßrige Suspension auf die Wärmetauscher aufgesprüht. In Anwesenheit eines Lotes oder einer lotbildenden Vorstufe wie Siliciumpulver oder Kaliumfluorsilikat bildet sich beim Erhitzen der Bauteile auf eine Temperatur oberhalb des Schmelzpunktes des Flußmittels eine stabile, nichtkorrosive Verbindung. Aus der DE-OS 197 49 042 ist zwar bereits ein Verfahren bekanntgeworden, mit welchem das bei dieser Verfahrensweise anfallende Abwasser im Kreislauf geführt werden kann. Andere Verfahrensparameter sind jedoch kritisch: Man muß die Konzentration der Flußmittelaufschlämmung kontrollieren, die Wärmetauscher müssen vor dem Erhitzen getrocknet werden, die Flußmittelaufschlämmungen, die ebenfalls im Kreislauf geführt werden, können Verunreinigungen aufnehmen. Diese Nachteile können vermieden werden, wenn man das Flußmittel trocken auf die zu verbindenden Bauteile aufbringt. Dies ist der Fall beim "Dry-Flux-Verfahren". Dabei wird das trockene Flußmittelpulver elektrostatisch auf die Bauteile aufgebracht. Vorteil ist, daß keine Aufschlämmungen hergestellt werden müssen, daß man die Konzentration der Aufschlämmung nicht kontrollieren muß, daß keine separate Trockenstufe für die Bauteile vorgesehen werden muß und daß kein Abwasser anfällt.

Aufgabe der vorliegenden Erfindung ist es, ein Flußmittel auf Basis von Alkalifluoraluminat anzugeben, welches pneumatisch gut förderbar ist, welches gut trocken versprüht werden kann und welches auf den besprühten Bauteilen gut haftet und sich deshalb für die Methode der Trockenapplikation ("dry fluxing") eignet. Diese Aufgabe wird durch das in den Ansprüchen angegebene Flußmittel gelöst.

Der Erfindung liegt die Erkenntnis zugrunde, daß die Partikelgröße bzw. die Korngrößenverteilung der Alkalifluoraluminatflußmittel einen Einfluß auf den pneumatischen Transport, die Sprühbarkeit und das Haftvermögen der Flußmittelteilchen auf den Bauteilen hat. Es wurde gefunden, daß es von Vorteil ist, wenn kleinere und größere Partikel im Flußmittel enthalten sind und ihr Verhältnis bestimmten Regeln unterworfen wird.

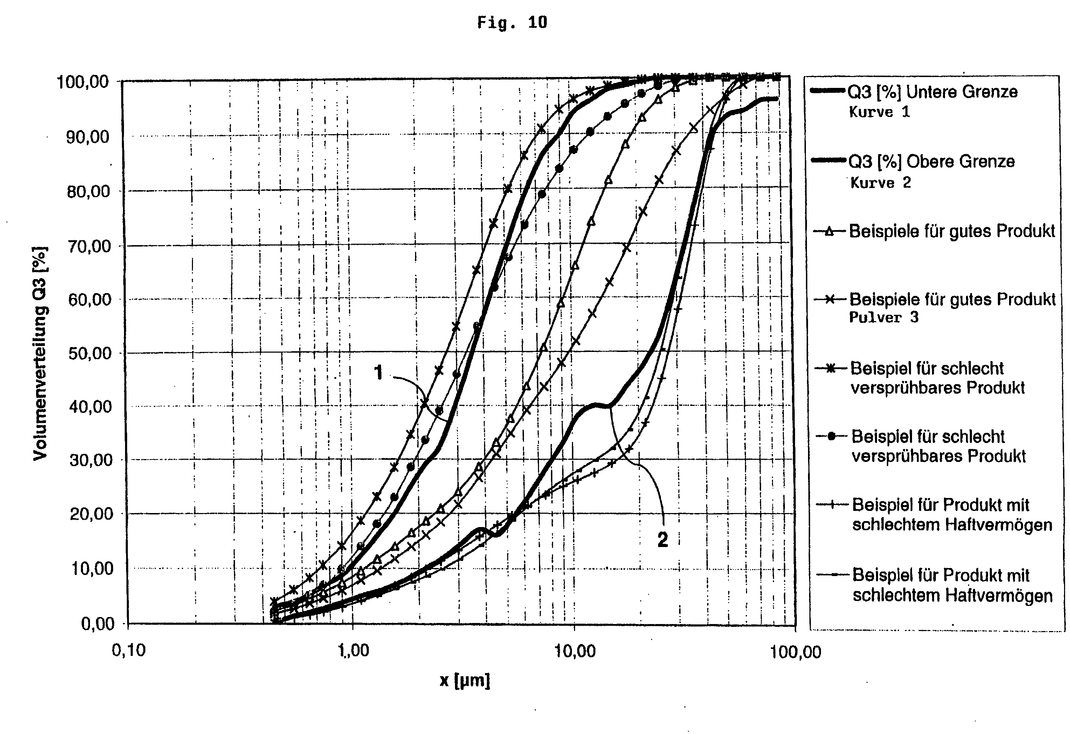

Das erfindungsgemäße, zur Trockenapplikation ("dryfluxing") brauchbare Flußmittel auf Basis von Alkalifluoraluminat ist dadurch gekennzeichnet, daß die Volumenverteilung der Partikel im wesentlichen innerhalb der Kurven 1 und 2 der Figur 10 liegt. Die Partikelgrößenverteilung wurde mittels Laserbeugung bestimmt.

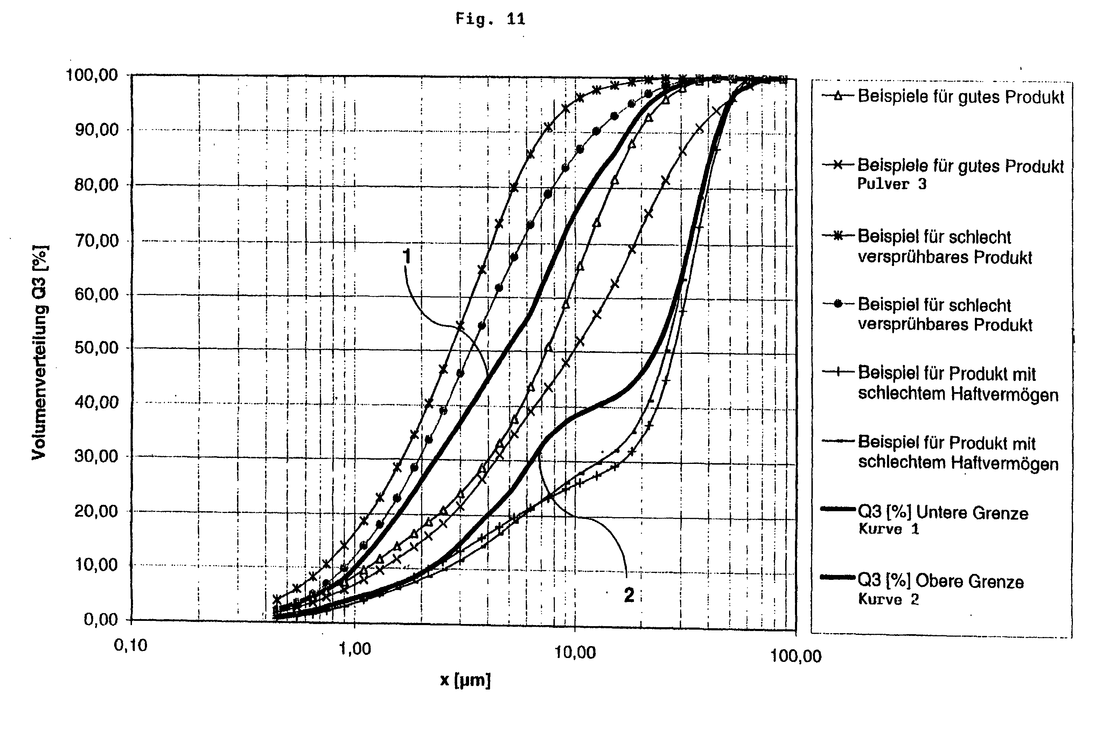

Bei einem bevorzugten Flußmittel liegt die Volumenverteilung der Partikel im wesentlichen innerhalb der Kurven 1 und 2 der Figur 11.

Figur 10 gibt die untere Grenze (Kurve 1) und die obere Grenze (Kurve 2) für Volumenverteilungskurven brauchbarer Pulver im Sinne der vorliegenden Erfindung wieder. Dabei handelt es sich um die Volumenverteilung in % der Pulver, kumuliert, aufgetragen gegen die Partikelgröße. Flußmittelpulver, deren kumulierte Volumenverteilung auf oder innerhalb der Kurven 1 und 2 der Figur 10 liegen, sind Pulver im Sinne der Erfindung.

Die kumulierte Volumenverteilung der Kurven 1 und 2 der Figur 10 gegen die Partikelgröße ist in der folgenden Tabelle A zusammengestellt.

**Tabelle A:** Kumulierte Volumenverteilung gegen Partikelgröße
der Kurven 1 und 2 der Figur 10

| x[μm] | Q3 [%] Untere Grenze | Q3 [%] Obere Grenze |
|---|---|---|
| 0,45 | 0,25 | 3,00 |
| 0,55 | 1,40 | 4,00 |
| 0,65 | 2,00 | 5,30 |
| 0,75 | 2,70 | 6,80 |
| 0,90 | 3,80 | 8,80 |
| 1,10 | 5,00 | 12,20 |
| 1,30 | 5,80 | 15,80 |
| 1,55 | 7,00 | 20,00 |
| 1,85 | 8,50 | 25,00 |
| 2,15 | 10,00 | 29,00 |
| 2,50 | 11,50 | 32,50 |
| 3,00 | 14,00 | 41,00 |
| 3,75 | 17,00 | 53,00 |
| 4,50 | 16,00 | 63,00 |
| 5,25 | 19,00 | 71,00 |
| 6,25 | 23,00 | 79,00 |
| 7,50 | 28,00 | 86,00 |
| 9,00 | 33,00 | 90,00 |
| 10,50 | 38,00 | 94,00 |
| 12,50 | 40,00 | 96,00 |
| 15,00 | 42,00 | 98,00 |
| 18,00 | 44,00 | 98,70 |
| 21,50 | 48,00 | 99,50 |
| 25,50 | 54,00 | 100,00 |
| 30,50 | 65,00 | 100,00 |
| 36,50 | 77,50 | 100,00 |
| 43,50 | 89,00 | 100,00 |
| 51,50 | 93,00 | 100,00 |
| 61,50 | 94,00 | 100,00 |
| 73,50 | 95,80 | 100,00 |
| 87,50 | 96,00 | 100,00 |

Untere Grenze = Kurve 1    Obere Grenze = Kurve 2

Lesebeispiel: 40 % des Volumens entfallen auf Partikel mit einem Durchmesser 12,5 μm oder weniger.

Es wurde festgestellt, daß Flußmittel mit einer kumulierten Volumenverteilung auf oder innerhalb der Kurven 1 und 2 der Figur 11 besonders vorteilhafte Dry-Flux-Eigenschaften aufweisen. Tabelle B gibt die Zahlenwerte der kumulierten Volumenverteilung gegen die Partikelgröße der Kurven 1 und 2 der Figur 11 wieder.

**Tabelle B:** Kumulierte Volumenverteilung der Partikelgröße der Kurven 1 und 2 der Figur 11

| x[μm] | Q3 [%] Untere Grenze | Q3 [%] Obere Grenze |
|---|---|---|
| 0,45 | 0,94 | 2,28 |
| 0,55 | 1,53 | 3,49 |
| 0,65 | 2,19 | 4,73 |
| 0,75 | 2,91 | 6,00 |
| 0,90 | 3,91 | 8,07 |
| 1,10 | 4,97 | 11,69 |
| 1,30 | 5,89 | 15,30 |
| 1,55 | 7,03 | 19,58 |
| 1,85 | 8,43 | 24,20 |
| 2,15 | 9,91 | 28,19 |
| 2,50 | 11,76 | 32,18 |
| 3,00 | 14,58 | 37,01 |
| 3,75 | 18,94 | 43,07 |
| 4,50 | 22,24 | 48,09 |
| 5,25 | 25,31 | 52,30 |
| 6,25 | 29,74 | 57,13 |
| 7,50 | 34,30 | 64,82 |
| 9,00 | 37,26 | 72,07 |
| 10,50 | 38,78 | 77,06 |
| 12,50 | 40,25 | 81,89 |
| 15,00 | 41,87 | 86,27 |
| 18,00 | 44,20 | 91,28 |
| 21,50 | 48,13 | 95,12 |
| 25,50 | 54,67 | 97,45 |
| 30,50 | 65,04 | 98,91 |
| 36,50 | 77,82 | 99,70 |
| 43,50 | 89,38 | 100,00 |
| 51,50 | 96,55 | 100,00 |
| 61,50 | 98,64 | 100,00 |
| 73,50 | 100,00 | 100,00 |
| 87,50 | 100,00 | 100,00 |

Untere Grenze = Kurve 1          Obere Grenze = Kurve 2

Das erfindungsgemäße Material kann durch Absieben unerwünschter Kornanteile, durch Vermischen von Material mit unterschiedlicher Korngrößenverteilung erhalten werden.

Der Sprühfaktor liegt bevorzugt bei 25, vorzugsweise bei 35, insbesondere bei 45 oder höher, das dabei bestimmte Verhältnis $H_{fluid}:H_0$ bei mindestens 1,05. Die obere Grenze für den Sprühfaktor lag bei 85, vorzugsweise 83,5. Die Ermittlung des Sprühfaktors und des Verhältnisses von $H_{fluid}$ zu $H_0$ (Höhe des expandierten Pulvers zum nichtexpandiertem Pulver) wird weiter unten beschrieben.

Das erfindungsgemäße Material eignet sich sehr gut zur Verwendung als Flußmittel im Dry-Fluxing-Verfahren. Dabei wird das Pulver durch Druckluft oder Stickstoff aus dem Vorratsbehälter in eine "Sprühkanone" eingebracht und dort elektrostatisch aufgeladen. Das Pulver verläßt dann den Sprühkopf der Sprühkanone und trifft auf die zu verlötenden Bauteile auf. Die zu verlötenden Bauteile werden dann, gegebenenfalls unter Zusammenfügen, in einem Lötofen, meist unter Inertgas für Stickstoff, oder durch Flammlöten verlötet.

Das erfindungsgemäße Pulver weist gegenüber bekannten Flußmitteln anwendungstechnische Vorteile auf. Beispielsweise hat es ein sehr gutes Fließverhalten. Dies wird auf die ausgewählte Verteilung der Partikelgröße zurückgeführt. Dieses gute Fließverhalten führt dazu, daß die Tendenz zu Verstopfungen ("Build-up") verringert wird. Das Material läßt sich sehr gut elektrisch aufladen. Das Material haftet sehr gut auf den zu verlötenden Bauteilen. Der Materialfluß ist sehr gleichförmig.

Die Erfindung wird anhand der folgenden Beispiele weiter erläutert, ohne sie in ihrem Umfang einzuschränken.

**Beispiele**

**Bestimmung der Volumenverteilung:**

System:         Sympatec HELOS
Hersteller:     Sympatec GmbH, System-Partikel-Technik

Aufbau:

Messgerät zur Bestimmung von Partikelgrößenverteilungen von Feststoffen mittels Laserbeugung.

Das Gerät besteht aus folgenden Komponenten:

Laserlichtquelle mit Strahlformung, Messzone, in der die zu vermessenden Partikel mit dem Laserlicht wechselwirken, einer Abbildungsoptik, welche die Winkelverteilung des gebeugten Laserlichtes in eine Ortsverteilung auf einem Photodetektor umwandelt, einem Multielement-Photodetektor mit Autofokus Einheit und nachgeschalteter Elektronik, welche die gemessene Intensitätsverteilung digitalisiert.

Die Berechnung der Partikelgrößenverteilung erfolgt mittels der Software WINDOX. Das Prinzip beruht auf der Auswertung der gemessenen Intensitätsverteilung des Beugungsmusters (n. Fraunhofer). Im vorliegenden Fall HRLD (high resolution Laser diffraction). Die Partikelgröße von nicht kugelförmigen Partikeln wird als Äquivalentdurchmesserverteilung beugungsgleicher Kugeln wiedergegeben. Vor der Messung müssen Agglomerate in Einzelpartikel zerlegt werden. Das zur Messung erforderliche Aerosol des Pulvers wird in einem Dispergiergerät, hier System RODOS erzeugt. Die gleichmäßige Zufuhr des Pulvers in das Dispergiergerät erfolgt mittels Schwingrinne (VIBRI).

Messbereich:    0,45...87,5 $\mu$m
Auswertung:     HRLD (Version 3.3 Rel.1)

Dichte der Probe:

Einstellung:    1 g/cm3
Formfaktor:     1 Komplexer Brechungsindex m=n-ik; n=1; i=0

**Auswertung:**

x           ist der Partikeldurchmesser in $\mu$m.
$Q^3$       ist der kumulierte Volumenanteil in % der Partikel bis zum aufgeführten Durchmesser.
$q^3$       ist die Dichteverteilung bei dem Partikeldurchmesser x
x10         ist der Partikeldurchmesser bei dem der kumulierte Volumenanteil 10 % erreicht.
c_opt       ist die optische Konzentration (Aerosoldichte) die bei der Messung auftrat.

M1,3 und Sv wurden nicht zur Auswertung herangezogen.

**Ausgangsmaterial:**

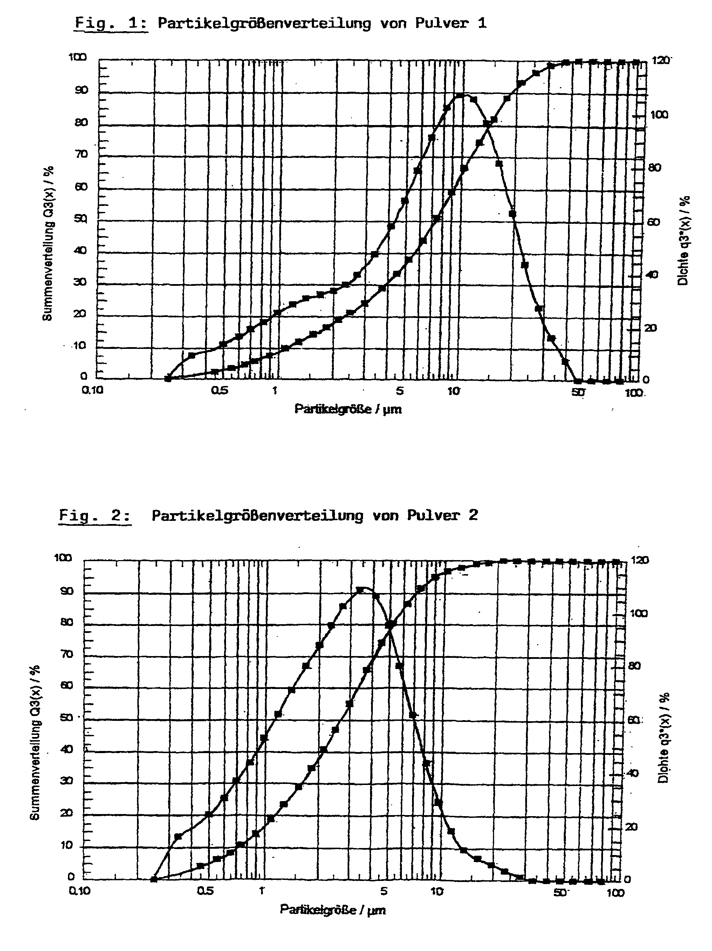

Zwei Pulver aus Kaliumfluoraluminat mit unterschiedlicher Korngrößenverteilung wurden hinsichtlich ihrer Eigenschaften zum Trockenbefluxen untersucht. Die Pulver sind durch Absieben unerwünschter Kornfraktionen erhältlich. Im folgenden ist die Korngrößenverteilung (Volumenverteilung) tabellarisch zusammengestellt. Die Partikelgrößenverteilung des Pulvers 1 ("gröberes" Material) sind in Figur 1, des Pulvers 2 ("feineres" Material) in Figur 2 optisch dargestellt.

**Tabelle 1:** Volumenverteilung des Pulvers 1

| Volumenverteilung | | | | | | | |
|---|---|---|---|---|---|---|---|
| x0/µm | Q3/% | x0/µm | Q3/% | x0/µm | Q3/% | x0/µm | Q3/% |
| 0,45 | 2,27 | 1,85 | 16,42 | 7,50 | 50,85 | 30,50 | 98,21 |
| 0,55 | 3,40 | 2,15 | 18,61 | 9,00 | 58,91 | 36,50 | 99,44 |
| 0,65 | 4,55 | 2,50 | 20,94 | 10,50 | 66,02 | 43,50 | 100,00 |
| 0,75 | 5,70 | 3,00 | 24,07 | 12,50 | 73,96 | 51,50 | 100,00 |
| 0,90 | 7,41 | 3,75 | 28,64 | 15,00 | 81,58 | 61,50 | 100,00 |
| 1,10 | 9,59 | 4,50 | 33,19 | 18,00 | 88,02 | 73,50 | 100,00 |
| 1,30 | 11,63 | 5,25 | 37,70 | 21,50 | 92,85 | 87,50 | 100,00 |
| 1,55 | 13,95 | 6,25 | 43,64 | 25,50 | 96,08 | -- | -- |

$x10 = 1,14$ µm     $x50 = 7,35$ µm     $x90 = 19,44$ µm

$Sv = 2,033$ m$^2$/cm$^3$     $Sm = 8132$ cm$^2$/g     copt $= 6,27$ %

**Tabelle 2:** Volumenverteilung des Pulvers 2

| Volumenverteilung | | | | | | | |
|---|---|---|---|---|---|---|---|
| x0/µm | Q3/% | x0/µm | Q3/% | x0/µm | Q3/% | x0/µm | Q3/% |
| 0,45 | 4,03 | 1,85 | 334,62 | 7,50 | 90,93 | 30,50 | 100,00 |
| 0,55 | 6,13 | 2,15 | 40,35 | 9,00 | 94,38 | 36,50 | 100,00 |
| 0,65 | 8,33 | 2,50 | 46,57 | 10,50 | 96,30 | 43,50 | 100,00 |
| 0,75 | 10,59 | 3,00 | 54,65 | 12,50 | 97,69 | 51,50 | 100,00 |
| 0,90 | 14,03 | 3,75 | 65,19 | 15,00 | 98,59 | 61,50 | 100,00 |
| 1,10 | 18,60 | 4,50 | 73,63 | 18,00 | 99,22 | 73,50 | 100,00 |
| 1,30 | 23,09 | 5,25 | 80,00 | 21,50 | 99,68 | 87,50 | 100,00 |
| 1,55 | 28,49 | 6,25 | 86,05 | 25,50 | 99,93 | -- | -- |

$x10 = 0,72$ µm     $x50 = 2,71$ µm     $x90 = 7,26$ µm

$Sv = 3,6046$ m$^2$/cm$^3$     $Sm = 14418$ cm$^2$/g     copt $= 6,74$ %

Zunächst wurde die Fluidisierbarkeit sowie die Fließfähigkeit der Pulver 1 bzw. 2 und bestimmter Mischungen von beiden untersucht.

Verwendete Apparatur und Durchführung:

1 Meßgerät zur Ermittlung der Pulver-Fluidisierbarkeit und Pulver-Fließfähigkeit (Binks-Sames powder fluidity indicator AS 100 - 451 195) wurde auf eine Vibrationseinheit (Fritsch L-24) aufgebaut. Das Meßgerät weist einen Fluidisierungszylinder mit poröser Membran am Boden auf. 250 g des jeweils zu untersuchenden Pulvers wurden in den Zylinder eingebracht, die Vibrationseinheit eingeschaltet und ein gleichförmiger (Kontrolle durch Durchflußmesser) Strom von trockenem Stickstoff durch die poröse Membrane in das Pulver eingeleitet. Das Pulver expandiert; zur Gleichgewichtseinstellung ließ man 1 Min. lang das Gas einwirken. Durch Messung der Höhe vor und nach dem Expandieren kann die Fluidisierbarkeit des jeweiligen Pulvers ermittelt werden.

Die Fluidisierbarkeit und Fließfähigkeit des jeweiligen Pulvers wurde über den sogenannten "Sprühfaktor" ermittelt. Der Sprühfaktor ist eine Kombination von Expansionsfaktor (Fluidisierbarkeit) und Massenfluß des Pulvers (Fließfähigkeit). Der Sprühfaktor stellt für die Dry-Flux-Anwendung einen wichtigen Faktor dar. Er wurde folgendermaßen bestimmt: Wie oben schon beschrieben, wurde das jeweils zu untersuchende Pulver im Fluidisierungszylinder expandiert. Für 30 Sek. wurde dann ein in der Seite des Zylinders angebrachtes Loch geöffnet, das durch dieses Loch den Zylinder verlassende Pulver in einem Becherglas aufgefangen und gewogen. Das Verhältnis von Menge des aufgefangenen Pulvers bezogen auf die Zeiteinheit von 0,5 Min. wird im folgenden als "Sprühfaktor" bezeichnet. Zur Erläuterung sei erwähnt, daß sehr gut fluidisierbare, fließfähige Pulver einen Sprühfaktor von 140 aufweisen. Sehr schlecht expandierbare, schlecht fließfähige Pulver liegen beispielsweise bei einem Sprühfaktor von 7. In der folgenden Tabelle 3 sind die ermittelten Sprühfaktoren für reines Pulver 1, reines Pulver 2 und dazwischenliegende Gemische mit 90, 80, 70 ... 10 Gew.-% von Pulver 1, Rest auf 100 Gew.-% Pulver 2 angegeben.

**Tabelle 3:**

| Pulver 1 (%) | Pulver 2 (%) | Sprühfaktor[1] (g/0,5 min.) |
|---|---|---|
| 100 | 0 | 71,88 |
| 90 | 10 | 63,56 |
| 80 | 20 | 35,54 |
| 70 | 30 | 25,33 |
| 60 | 40 | 22,51 |
| 50 | 50 | 21,52 |
| 40 | 60 | 14,76 |
| 30 | 70 | 13,83 |
| 20 | 80 | 11,28 |
| 10 | 90 | 9,77 |
| 0 | 100 | 7,35 |

[1] **Durchschnittswert mehrerer Messungen**

Bei Versuchen wurde festgestellt, daß sich ein gutes Fließverhalten bei einem Sprühfaktor größer als etwa 45 g/0,5 min. einstellt.

Der Sprühfaktor kann auch folgendermaßen berechnet werden:

a) Man berechnet den Expansionsfaktor (cm/cm):

$H_{fluid}:H_0$ mit $H_{fluid}$ = Höhe des expandierten Pulvers,
$H_0$ = Höhe des nicht fluidisierten Pulvers, Vibrator abgeschaltet und Stickstoffzufuhr abgestellt.

Man bestimmt den Durchschnitt aus jeweils 5 Messungen von über dem Durchmesser verteilten Meßpunkten.

b) Fluß des Pulvers in (g/0,5 min):
Die Masse des Pulvers, die in 0,5 min aus dem Loch fließt, wird als Medianwert aus 10 Messungen bestimmt.

Berechnung des Medians:

Median $m = m_9 + m_2/2$ für 10 Einzelmessungen mit $m_5<m_3<m_1<m_7<m_9<m_2<m_4<m_8<m_{10}<m_6$
Der Sprühfaktor $R_m$ ist dann

$$R_m(g/0{,}5\ min) = m(g/0{,}5\ min)\cdot \text{Expansionsfaktor.}$$

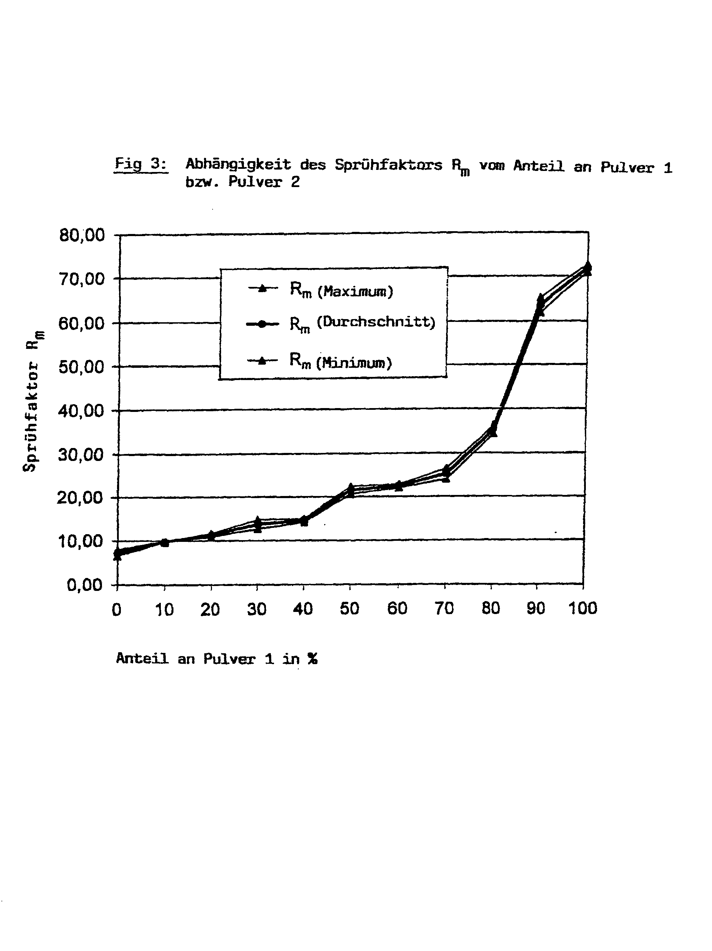

Erstaunlicherweise änderte sich der Sprühfaktor nicht linear mit der Zusammensetzung der Pulvermischung, sondern er wies einen starken Sprung der Eigenschaften im Bereich von etwa 80 - 90 % des Anteils der Probe 1 auf. Dies ist graphisch in Figur 3 dargestellt. Aufgetragen ist der Sprühfaktor in g/0,5 min gegen den Prozentanteil des Pulvers 1 in der Mischung. Dies belegt, daß der Gehalt an Feinanteilen in Pulver einen großen Einfluß auf die Fließfähigkeit besitzt.

Untersuchung der Haftfähigkeit auf Aluminiumbauteilen in Abhängigkeit von der Korngrößen-Verteilung:

Die Haftfähigkeit wurde durch ein sehr einfaches Verfahren getestet, welches gute Rückschlüsse auf die technische Brauchbarkeit der untersuchten Pulver bei der Trockenbefluxung zuläßt.
Eine flache, quadratische Aluminiumplatte der Ausmaße 0,5 m x 0,5 m wurde elektrostatisch auf einer Seite mit dem zu untersuchenden, trockenen Flußmittelpulver durch Besprühen beschichtet. Die Beladung mit Flußmittel wurde ausgewogen; die Platte wurde dann in vertikaler Stellung aus 5 cm Höhe auf den Boden fallengelassen und der Verlust an Flußmittel als Prozentanteil der ursprünglichen Flußmittelbeladung notiert. Für die Pulver wurden jeweils 10 Messungen durchgeführt. Schlecht haftende Pulver zeigten einen vergleichsweise hohen Gewichtsverlust verglichen mit dem geringen Gewichtsverlust bei Anwendung erfindungsgemäßer Pulver (siehe Pulver 3 und Pulver 4).

Untersuchungen unter praxisnahen Bedingungen:

Zwei verschiedene Einrichtungen wurden verwendet. Eine Einrichtung war eine Flußmittel-Aufbringungseinrichtung ("Fluxing Booth") der Firma Nordson, geeignet für die halbkontinuierliche Durchführung. Maße der Einheit: 216 cm Höhe, 143 cm Breite, 270 cm Tiefe. Wichtigste Bauteile waren ein Vorratsbehälter, eine Sprühkanone, zwei Filterkartuschen und die Kontrolleinheiten. Das zu befluxende Bauteil wurde auf einen Rost gestellt, welches manuell vor und zurück bewegt werden konnte. Die Sprühkanone bewegte sich automatisch von links nach rechts und wieder zurück in Intervallen von etwa 21 Sekunden (21 Sekunden für 65 cm, d. h. die Geschwindigkeit war 3,1 cm/sec.).
Als zweite Befluxungseinheit wurde in diesem System ein Behälter von ITW/Gema zusammen mit einer Sprühkanone und Kontrolleinheit eingebaut.
Der Abstand zwischen den Sprühköpfen und dem Rost war 34 cm.

Arbeitsprinzip:

Der Behälter der Firma Nordson wandte das Prinzip der Pulverfluidisierung an, um das Flußmittel über eine Venturi-Pumpe und einen Zuführungsschlauch in die Sprühkanone einzubringen. Eine Rühr- oder Schüttelvorrichtung im Behälter unterstützte die Fluidisierung des Flußmittels.
Das System von ITW/Gema wies einen Behälter auf, der Schneckenförderer besitzt ("Helix Screw Conveyor"), um das Pulver mechanisch in einen Trichter zu befördern. Eine Venturi-Pumpe fördert das Flußmittel dann durch einen Schlauch in die Sprühkanone.
Das System von ITW/Gema war mit Vibratoren an einigen Stellen ausgerüstet, um Verstopfungen durch das Flußmittel zu vermeiden. Die Sprühkanonen arbeiteten mit 100 kV zur Aufladung des Pulvers.
Die in den Beispielen aufgeführten Pulver wurden in der Apparatur nach Nordson bzw. ITW/Gema eingesetzt, um die Gleichmäßigkeit des Flußmitteltransports und des Sprühvorgangs und die Beladung von Prüfkörpern (Wärmetauscher mit einer Oberfläche von 4,8 m$^2$) zu untersuchen. Zunächst wurden die Kontrolleinheiten bezüglich des Luftdurchflusses bzw. der Schraubengeschwindigkeit so justiert, daß eine Flußmittelbeladung von ungefähr 5 g/m$^2$ erreicht wurde. Anschließend wurde das Experiment 30 Minuten fortgeführt, ohne die Einstellung der Apparaturen zu ändern. In Intervallen von 2 - 4 Minuten wurden Prüfkörper auf den Rost zwecks Besprühung mit Flußmittel plaziert, und dann zur Bestimmung der Flußmittelbeladung ausgewogen. Jede Testserie umfaßte 10 oder 11 Messungen. Die Ergebnisse sind in Tabelle 4 zusammengestellt.

**Tabelle 4:** 30-Minuten-Test, Flußmittelbeladung auf Wärmetauschern

| Zielbeladung: 5g/m2 | Pulver 1 Flußmittelbeladung (g/m2) | | | Pulver 2 Flußmittelbeladung (g/m2) | | |
|---|---|---|---|---|---|---|
| | min. | max. | Differenz | min. | max. | Differenz |
| Nordson | 4,8 | 5,5 | 0,7 | 4,6 | 6,0 | 1,4 |
| ITW/Gema | 4,8 | 5,3 | 0,5 | 5,0 | 5,5 | 0,5 |

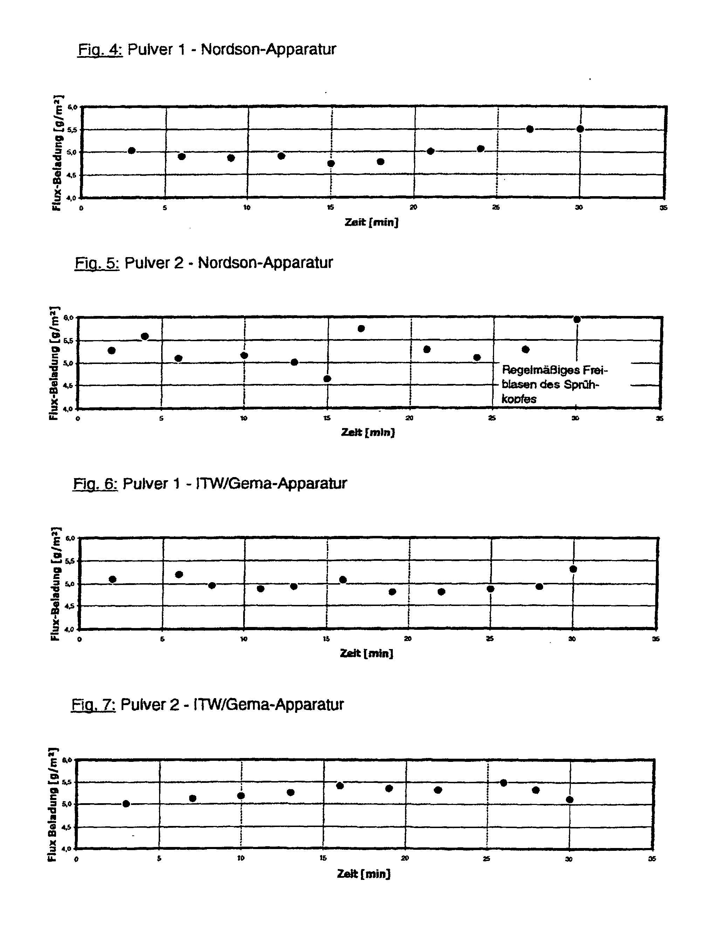

In den Figuren 4 bis 7 sind für die Nordson-Apparaturen bzw. die ITW/Gema-Apparaturen die Flußmittelbeladungen gegen die Zeit für Pulver 1 bzw. Pulver 2 graphisch zusammengestellt. Für Pulver 2 mußte in der Nordson-Apparatur der Sprühkopf regelmäßig freigeblasen werden, um Verstopfungen zu vermeiden.

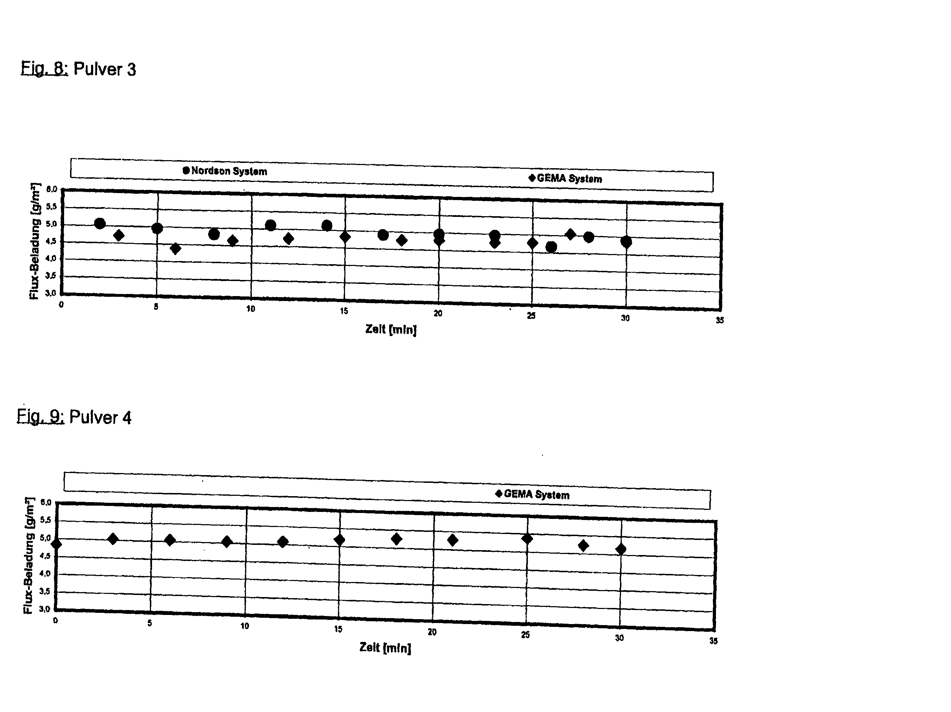

Die 30-Minuten-Test-Untersuchungen wie oben beschrieben, wurden für weitere Pulver untersucht. Pulver 3 hatte folgende Eigenschaften: einen gemessenen Wert von $R_m$ von 59,25; $H_{fluid}$:$H_0$ (mm/mm)= 1,11; einen Haftverlust von 11,5 %; und folgende Partikelgrößenverteilung: 90 % aller Teilchen besaßen eine Größe von <35,15 μm; 50 % aller Teilchen besaßen eine Größe von <9,76 μm, 10 % aller Teilchen besaßen eine Größe von <1,35 μm. Ein Peakmaximum der Korngrößenverteilung lag bei 5 μm, der zweitgrößte Peak lag bei 20 μm. Die aufsummierte Volumenverteilung dieses Pulvers ist in Figur 5 und Figur 6 als Beispiel für gut brauchbares Pulver wiedergegeben. Dieses Material lieferte sowohl der Nordson-Apparatur als auch in der ITW/Gema-Apparatur sehr gute Ergebnisse. Es war weder ein "Spucken" in der Apparatur zu bemerken, noch war ein Abblasen des Sprühkopfes notwendig. Die gebildete Schicht war "sehr schön". Die Flußmittelbelegung gegen die Zeit ist in Figur 8 wiedergegeben. Ein weiteres Material war das Pulver 4 und es besaß einen Sprühfaktor von $R_m$ = 82,85; $H_{fluid}$:$H_0$ war 1,10; der Verlust beim Haftungsversuch betrug 16,7 %; die Partikelgrößenverteilung: 90 % aller Teilchen besaßen einen Durchmesser von weniger als 28,6 μm; 50 % aller Teilchen besaßen einen Durchmesser von 8,9 μm; 10 % aller Teilchen besaßen einen Durchmesser von weniger als 1,67 μm; die Korngrößenverteilung besaß einen Peak bei 9,5 sowie bei 20 μm. auch dieses Material lieferte hervorragende Ergebnisse. Figur 9 gibt die Gleichmäßigkeit der Flußmittelbelegung mit dem Pulver 4 auf dem Wärmetauscher gegen die Zeit wieder.

Akzeptable Ergebnisse wurden auch mit folgendem Kaliumfluoraluminat-Pulver 5 erzielt: $R_m$= 46,99; Verhältnis $H_{fluid}$:$H_0$ = 1,05, Verlust Belegung: 6,39 %, Partikelgrößenverteilung: 90 % aller Teilchen <19,84 μm; 50 % aller Teilchen <7,7 μm; 10 % aller Teilchen <1,16 μm, max. Peak der Korngrößenverteilung bei 13.

**Patentansprüche**

1. Zur Trockenapplikation ("dry fluxing") brauchbares Flußmittel auf Basis von Alkalifluoraluminat, **dadurch gekennzeichnet, daß** die Volumenverteilung der Partikel im wesentlichen innerhalb der Kurven 1 und 2 der Figur 10 liegt.

2. Flußmittel nach Anspruch 1, **dadurch gekennzeichnet, daß** die Volumenverteilung der Partikel im wesentlichen innerhalb der Kurven 1 und 2 der Figur 11 liegt.

3. Flußmittel nach Anspruch 1, **dadurch gekennzeichnet, daß** es sich um ein Flußmittel auf Basis von Kaliumfluoraluminat handelt.

4. Verfahren zum Löten von Aluminium oder Aluminiumlegierungen, wobei man ein Flußmittel der Ansprüche 1 bis 3 verwendet, welches man trocken und elektrostatisch aufgeladen auf die zu verbindenden Bauteile aufbringt und die Bauteile unter Erhitzen verlötet.

**Claims**

1. A flux based on alkali fluoroaluminate which can be used for dry application ("dry fluxing"), **characterised in that** the volume distribution of the particles lies substantially within Curves 1 and 2 of Figure 10.

2. A flux according to Claim 1, **characterised in that** the volume distribution of the particles lies substantially within Curves 1 and 2 of Figure 11.

3. A flux according to Claim 1, **characterised in that** it is a flux based on potassium fluoroaluminate.

4. A process for soldering aluminium or aluminium alloys, wherein a flux of Claims 1 to 3 is used which is applied dry and electrostatically charged to the components which are to be joined and the components are soldered with heating.


**Revendications**

1. Flux à base d'aluminate de fluor alcalin, pouvant être utilisé pour une application à sec ("dry fluxing"), **caractérisé en ce que** la répartition de volume des particules se situe sensiblement à l'intérieur des courbes 1 et 2 de la figure 10.

2. Flux selon la revendication 1, **caractérisé en ce que** la répartition de volume des particules se situe sensiblement à l'intérieur des courbes 1 et 2 de la figure 11.

3. Flux selon la revendication 1, **caractérisé en ce qu'**il s'agit d'un flux à base d'aluminate de fluor potassium.

4. Procédé pour le brasage ou soudage d'aluminium ou d'alliages d'aluminium utilisant un flux selon les revendications 1 à 3, que l'on applique sec et chargé electrostatiquement sur les pièces à assembler, les pièces étant alors brasées ou soudées en les chauffant.

EP 1 230 065 B1

**Fig. 1:** Partikelgrößenverteilung von Pulver 1

**Fig. 2:** Partikelgrößenverteilung von Pulver 2

11

Fig 3: Abhängigkeit des Sprühfaktors $R_m$ vom Anteil an Pulver 1
bzw. Pulver 2

Fig. 4: Pulver 1 - Nordson-Apparatur

Fig. 5: Pulver 2 - Nordson-Apparatur

Fig. 6: Pulver 1 - ITW/Gema-Apparatur

Fig. 7: Pulver 2 - ITW/Gema-Apparatur

Fig. 8: Pulver 3

Fig. 9: Pulver 4

Fig. 10

EP 1 230 065 B1

Fig. 11

Fig. 11

EP 1 230 065 B1